# EUROPEAN PATENT APPLICATION

(11) **EP 1 193 196 A1**
(43) Date of publication of application: **03.04.2002**
(21) Application number: 01908351.8
(22) Date of filing: 06.03.2001
(51) Int. Cl.: B65G 1/137, G06F 17/60

(54) **EXPENDABLE SUPPLY MANAGING SYSTEM**

(30) Priority: 07.03.2000 JP 2000062600; 09.02.2001 JP 2001033691
(71) Applicant: SEIKO EPSON CORPORATION, Shinjuku-ku, Tokyo 163-0811 (JP)
(72) Inventor: ARUGA, Shuichi, Suwa-shi, Nagano 392-8502 (JP); SATO, Ryohei, Suwa-shi, Nagano 392-8502 (JP)
(74) Representative: Sturt, Clifford Mark
(86) International application number: JP0101730
(87) International publication number: WO0166442

(57) **Abstract**

A system for managing the replenishment of consumables is configured by composing, via communications lines, a network of computers 11 for managing the state of consumption, which manages the state of consumption of ink and printing paper as consumables to be consumed in apparatuses for printing digital photographing images installed in a plurality of DPE shops 10, a computer 21 for managing the replenishment of consumables, which is installed in a management company 20 that manages the replenishment of consumables for apparatuses for printing digital photographic images, which are installed in the respective DPE shops 10, on the basis of information from the computers 11 for managing the state of consumption, which are installed in the respective DPE shops 10, and a computer 31 for managing the delivery, installed in a logistics company 30, which procures the consumables and actually replenishes the same by delivering the same, wherein it becomes possible to adequately and timely manage the replenishment of the consumables and to prevent the replenishment of the consumables from being forgotten.

## Description

### TECHNICAL FIELD

The present invention relates to a method for replenishing consumables, a system for managing the replenishment of consumables, equipment for managing the replenishment of consumables, and a program for managing the replenishment of consumables.

### BACKGROUND ART

Recently, apparatuses for printing digital picture images have become prevalent in DPE shops where consumers have been printing films or picture images taken by digital cameras and those, which are obtained by digitalizing picture images taken by silver salt photographing, in DPE shops. In such apparatuses for printing digital picture images used for this type of printing, it is necessary to replenish and manage consumables such as ink cartridges, printing sheets of paper, etc., wherein operators in DPE shops check the consuming state of such consumables from time to time, place orders to a suppliers or make purchases for replenishment.

However, in such replenishing management of consumables, the replenishing management of consumables depends upon human elements, wherein various problems frequently arise, for example, forgetting of a replenishment, or forgetting of placing orders which occur at a considerably high frequency.

It is therefore an object of the invention to provide a method for replenishing consumables, a system for managing the replenishment of consumables, and equipment for managing the replenishment of consumables, which are able to solve such problems due to forgetting to replenish consumables. Another object of the invention is to provide a method for replenishing consumables, a system for managing the replenishment of consumables, and equipment for managing the replenishment of consumables, which are able to adequately or timely replenish consumables. Still another object of the invention is to provide a method for replenishing consumables, a system for managing the replenishment of consumables, and equipment for managing the replenishment of consumables, which are able to automate the replenishment and management of such consumables. Furthermore, another object of the invention is to provide a method for replenishing consumables, a system for managing the replenishment of consumables, and equipment for managing the replenishment of consumables, which are able to further adequately calculate charges and costs in line with the replenishment of consumables. Still further, another object of the invention is to provide a program for managing the replenishment of consumables, by which a computer is caused to function as equipment for managing the replenishment of consumables.

### DISCLOSURE OF INVENTION

A method for replenishing consumables, a system for managing the replenishment of consumables, equipment for managing the replenishment of consumables, and a program for managing the replenishment of consumables according to the invention employs the following technique in order to achieve at least one of the above-described objects.

The method for replenishing consumables according to the invention is a method for replenishing appointed consumables for a plurality of apparatuses that consume the corresponding consumables, which comprises the steps of: (a) acquiring the state of consumption of the corresponding consumables of the corresponding plurality of apparatuses via communications lines; (b) judging the necessity of replenishment of the corresponding consumables for the corresponding plurality of apparatuses on the basis of the state of the consumption acquired above; and (c) replenishing the corresponding consumables for any of the corresponding apparatuses, which corresponds to the results of the corresponding judgement.

According to the method for replenishing consumables according to the invention, the necessity for replenishment of appointed consumables is judged or determined on the basis of the state of replenishment of the appointed consumables in a plurality of apparatuses, which consume consumables, which have been acquired via communications lines, wherein, since the appointed consumables are replenished for any of the plurality of apparatuses on the basis of the results of the judgement, it is possible to prevent forgetting of the replenishment of such appointed consumables.

In such a method for replenishing consumables according to the invention, the above-described step (b) judges or determines replenishment of the appointed consumables when the remaining quantity of the appointed consumables or the quantity of consumption thereof reaches an appointed level in the above-described apparatuses. If so, it is possible to replenish the appointed consumables when the remaining quantity of the appointed consumables or the quantity of consumption thereof reaches an appointed level. As a result, it is possible to prevent replenishment of the consumables from being forgotten.

Further, in the method for replenishing consumables according to the invention, the above-described step (b) judges or determines replenishment of the appointed consumables when the remaining quantity of the appointed consumables or the quantity of consumption thereof reaches an appointed level that is individually established in respective apparatuses that consume consumables. Thereby, it is possible to judge or determine the replenishment of the appointed consumables on the basis of the appointed quantities that are respectively established in a plurality of apparatuses that consume the consumables. In the method for replenishing consumables according to the present embodiment of the invention, the above-described step (b) is a step for judging or determining the replenishment of the above-described appointed consumables by using the above-described quantities that are established on the basis of the results of the consumption of the above-described consumables, whereby it is possible to judge or determine the replenishment of the appointed consumables on the basis of the results of the consumption in the respective apparatuses. Resultantly, it is possible to further securely prevent the replenishment of the appointed consumables from being forgotten.

Further, in the method for replenishing consumables according to the invention, the above-described step (c) further comprises the steps of (c1) outputting an instruction for replenishment of the above-described consumables for the above-described plurality of apparatuses, which consume consumables, via communications lines on the basis of the results of the judgement or determination; and (c2) acquiring the corresponding outputted instruction for replenishment via the above-described communications lines and simultaneously replenishing the above-described appointed consumables for the above-described apparatuses, which consume consumables, on the corresponding instruction for replenishment.

Or, in the method for replenishing consumables according to the invention, the above-described apparatuses that consumes consumables are printing machines having at least one ink jet printer, and the above-described appointed consumables may be printing ink and printing sheets of paper, which are provided to the above-described ink jet printer.

Also, the method for replenishing consumables according to the invention may further include the steps of (d) calculating charges on the basis of the state of consumption, which is acquired as described above, and (e) collecting the calculated charges, wherein it is possible to make a charge for the replenishment of the appointed consumables.

In the method for replenishing consumables according to the invention, the above-described plurality of apparatuses that consume consumables are printing machines having at least one ink jet printer, and the above-described appointed consumables are printing ink and a plurality of printing sheets of paper, which are provided to the above-described ink jet printer. Further, (d) the charges may be calculated on the above-described acquired state of consumption and the unit prices in compliance with the type of printing sheets of paper, and (e) the calculated charge may be collected. Therefore, it is possible to further accurately calculate the charges. In the method for replenishing consumables according to the present embodiment of the invention, the above-described step (d) may be made into a step in which the charges are calculated by using the unit prices in compliance with printing information. Herein, the printing information includes data that are obtained by multiplying a printing area and number of dots by the amount of ink per dot. The following printing information has the same meaning. Thereby, it is possible to further accurately calculate the charges.

A system for managing the replenishment of consumables according to the invention manages to replenish appointed consumables for a plurality of apparatuses, which consume the corresponding appointed consumables, and includes a section for detecting the state of consumption, which is able to detect the state of consumption of the above-described appointed consumables of the above-described plurality of apparatuses, which consume the above-described consumables, via communications lines; a section for judging or determining the replenishment of the appointed consumables for the above-described plurality of apparatus for consuming consumables on the basis of the corresponding detected state of the consumption; and a section for instructing the replenishment of the corresponding appointed consumables for any of the above-described apparatuses corresponding thereto when the above-described judging section judges or determines the replenishment of the above-described appointed consumables.

In the system for managing the replenishment of consumables according to the present invention, the state of consumption of the appointed consumables in a plurality of apparatuses, which consume consumables, can be detected via communications lines , the replenishment of the appointed consumables is judged or determined on the basis of the state of consumption, and the replenishment of the appointed consumables for a plurality of apparatuses is instructed, wherein it is possible to prevent the replenishment of the appointed consumables from being forgotten, and simultaneously the replenishment can be adequately carried out. And, replenishment and management of consumables can be automated.

In such a system for managing the replenishment of consumables according to the invention, the section for detecting the state of consumption may be provided with a section for detecting the quantity of consumption of the consumables or the remaining quantity thereof in the above-described apparatuses that consume the consumables, and a section for transmitting and outputting the corresponding detected quantity of consumption of the above-described appointed consumables and the remaining quantity thereof to the above-described replenishment judging section via the above-described communications lines.

In the system for managing the replenishment of consumables according to the invention, the above-described replenishment judging section may judge or determine replenishment of the above-described appointed consumables when the remaining quantity of the above-described appointed consumables or the quantity of consumption thereof becomes the predetermined level in the above-described apparatuses that consume consumables, wherein it is possible to timely replenish the appointed consumables when the remaining quantity of the appointed consumables or the quantity of consumption thereof becomes the predetermined level. As a result, it is possible to prevent the replenishment of the appointed consumables from being forgotten.

In addition, in the system for managing the replenishment of consumables according to the invention, the above-described replenishment judging section may judge or determine the replenishment of the above-described appointed consumables when the remaining quantity of the above-described appointed consumables or the quantity of consumption thereof in the above-described plurality of apparatuses becomes a predetermined level that is individually established in a plurality of respective apparatuses that consume consumables, wherein it is possible to judge or determine the replenishment of the appointed consumables on the basis of the predetermined level that is individually established in a plurality of the respective apparatuses that consume consumables. In the system for managing the replenishment of consumables according to the present embodiment of the invention, the above-described replenishment judging section may judge or determine the replenishment of the above-described appointed consumables by using the above-described predetermined level that has been established on the basis of the results of consumption of the above-described appointed consumables of the above-described plurality of apparatuses that consume consumables. Therefore, it is possible to judge or determine the replenishment of the appointed consumables on the basis of the individual results of consumption in respective apparatuses that consume consumables. As a result, it is possible to further securely prevent the replenishment of the consumables from being forgotten.

In the system for managing the replenishment of consumables according to the invention, the above-described replenishment instructing section may output the replenishment of the corresponding appointed consumables for the corresponding apparatus to a replenishment instruction receiving section via communications lines, wherein a place of the replenishment instruction section may be made different from a place of the replenishment instruction receiving section. As a result, as in, for example, a case where the replenishment judging section and replenishment instructing section are installed in a management center, and simultaneously the replenishment instruction receiving section is installed in a logistics company, both replenishment management of appointed consumables and actual replenishment can be further adequately carried out.

In the system for managing the replenishment of consumables according to the invention, the above-described apparatuses that consume consumables are printing machines having at least one ink jet printer, wherein the above-described appointed consumables may be printing ink and printing sheets of paper, which are provided to the above-described ink jet printer. Therefore, it is possible to prevent the replenishment of the printing ink and printing sheets of paper, which are used as consumables necessary for the printing machine, from being forgotten.

In addition, the system for managing the replenishment of consumables according to the invention further includes a section for calculating charges on the basis of the state of consumption that has been detected as described above, and a section for claiming the charges on the basis of the corresponding charge calculations, wherein it is possible to charge for the replenishment of the above-described appointed consumables.

In the system for managing the replenishment of consumables according to the invention, the above-described plurality of apparatuses that consume consumables are printing machines having at least one ink jet printer, and the above-described appointed consumables are printing ink and a plurality of types of printing sheets of paper, which are provided to the above-described ink jet printer. Also, the system further includes a section for calculating charges on the basis of the above-described detected state of consumption and unit prices in compliance with the type of printing sheets of paper, and a section for instructing claims on the basis of the corresponding charge calculations, wherein further adequate charge calculations can be carried out. In the system for managing the replenishment of consumables according to such an embodiment, the above-described charge calculating section may be made into a section for calculating charges by using unit prices in compliance with the printing information. Thereby, still further adequate charge calculations can be carried out.

Equipment for managing the replenishment of consumables according to the invention is to manage the replenishment of appointed consumables for a plurality of apparatuses that consume the corresponding appointed consumables, and the apparatuses comprise a section for inputting the state of consumption of consumables of the above-described plurality of apparatuses that consume the corresponding consumables via communications lines; a section for judging or determining the replenishment of the corresponding consumables on the corresponding inputted states of consumption; and a section for instructing the replenishment of the corresponding consumables for the corresponding apparatuses that consume the corresponding consumables.

In the equipment for managing the replenishment of consumables according to the invention, the state of consumption of appointed consumables in a plurality of apparatuses that consume the appointed consumables is inputted via communications lines, and the replenishment of the appointed consumables into the corresponding apparatuses that consume the appointed consumables is instructed by judging the replenishment of the appointed consumables on the basis of the inputted state of consumption, wherein it is possible to prevent the replenishment of the appointed consumables from being forgotten, and the appointed consumables can be adequately replenished. Therefore, management to replenish consumables can be automated.

In the equipment for managing the replenishment of consumables according to such an embodiment, the above-described replenishment judging section may judge or determine the replenishment of the above-described appointed consumables when the remaining quantity of the above-described appointed consumables or the quantity of consumption thereof becomes a predetermined level in the above-described apparatuses that consume the appointed consumables, wherein it is possible to timely replenish the appointed consumables when the remaining quantity of the appointed consumables or the quantity of consumption becomes the predetermined level. As a result, it is possible to prevent the replenishment of the appointed consumables from being forgotten.

Further, in the equipment for managing the replenishment of consumables according to the invention, the above-described replenishment judging section judges or determines the replenishment of the above-described appointed consumables when the remaining quantity of the above-described appointed consumables of the above-described plurality of apparatuses, which consume the consumables, or the quantity of consumption thereof becomes the predetermined level that is individually established in the respective apparatuses, wherein it is possible to judge or determine the replenishment of the appointed consumables on the basis of the predetermined level that is individually established in a plurality of apparatuses that consume the appointed consumables. In the equipment for managing the replenishment of consumables according to the present embodiment, the above-described replenishment judging section may judge or determine the replenishment of the above-described appointed consumables by using the above-described predetermined level that is established on the results of consumption of the above-described appointed consumables of the above-described plurality of apparatuses that consumes the appointed consumables, wherein it is possible to judge or determine the replenishment of the appointed consumables on the basis of the individual results of consumption in the respective apparatuses that consume the appointed consumables. As a result, it is possible to further securely prevent the replenishment of the appointed consumables from being forgotten.

In addition, in the equipment for managing the replenishment of consumables according to the invention, the above-described replenishment instructing section may output the replenishment of the corresponding appointed consumables for the above-described corresponding apparatuses, which consume the appointed consumables, to a replenishment instruction receiving apparatus connected thereto via communications lines , wherein the consumables replenishment managing apparatus may be installed at a place differing from the place where the replenishment instruction receiving apparatus is installed. For example, the consumable replenishment managing apparatus may be installed at a management center while the replenishment instruction receiving apparatus is installed in a logistics company. As a result, it is possible to further adequately carry out the replenishment management of the appointed consumables and actual replenishment thereof.

In addition, the equipment for managing the replenishment of consumables according to the invention, the above-described apparatuses that consume consumables may be printing machines having at least one ink jet printer, and the above-described appointed consumables may be printing ink and printing sheets of paper, which are provided to the above-described ink jet printer, wherein it is possible to prevent the replenishment of the printing ink and printing sheets of paper, which are used as consumables necessary for the printing machines, from being forgotten.

Also, the equipment for managing the replenishment of consumables according to the invention may further include a section for calculating charges on the basis of the above-described inputted state of consumption, and a section for instructing a claim on the basis of the corresponding charge calculation, wherein it is possible to charge for the replenishment of the appointed consumables used.

In the equipment for managing the replenishment of consumables according to the invention, the above-described apparatuses that consume consumables may be printing machines having at least one ink jet printer, and the above-described appointed consumables may be printing ink and a plurality of types of printing sheets of paper, which are provided to the above-described ink jet printer, and the above-described apparatus may further include a section for calculating charges on the basis of the above-described inputted state of consumption and unit prices in compliance with the types of the printing sheets of paper; and a section for instructing a claim on the basis of the corresponding charge calculation, wherein it is possible to further adequately calculate the charges. In the equipment for managing the replenishment of consumables according to the present embodiment of the invention, the above-described charge calculating section may calculate the charges by using the unit prices responsive to the printing information, wherein further accurate calculation of the charges can be carried out.

A program for managing the replenishment of consumables according to the invention causes a computer to operate as equipment for managing the replenishment of consumables according to any one of the above-described embodiments, that is, equipment for managing the replenishment of the corresponding appointed consumables for a plurality of apparatuses that consume the corresponding appointed consumables, wherein the equipment includes a section for inputting the state of consumption of consumables of the above-described plurality of apparatuses, which consumes the corresponding consumables, via communications lines; a section for judging or determining the replenishment of the consumables on the basis of the corresponding inputted state of consumption; and a section for instructing the replenishment of the corresponding consumables for the corresponding apparatus that consumes the consumables.

Also, the program for managing the replenishment of consumables according to the invention can cause a computer to function as the above-described equipment for managing the replenishment of consumables according to the invention. As a result, various effects can be brought about, which are an effect of preventing the replenishment of appointed consumables from being forgotten and an effect of adequately or timely replenishing the appointed consumables.

### BRIEF DESCRIPTION OF THE DRAWINGS

Fig. 1 is a view showing the outline of the configuration of a system for managing the replenishment of consumables according to an embodiment of the invention;
Fig. 2 is a view showing one example of the network configuration of the system for managing the replenishment of consumables according to the above-described embodiment;
Fig. 3 is a view showing the outline of the configuration of an apparatus for printing digital photographic images which is installed in a DPE shop 10;
Fig. 4 is a view explaining one example of shop information stored on a hard disk of a computer 21 for managing the replenishment of consumables;
Fig. 5 is a view explaining one example of stock information stored on a hard disk of a computer 31 for managing a delivery of consumables;
Fig. 6 is a flow chart showing one example of a routine for processing to detect the state of consumption, which is executed by a computer 11 for managing the state of consumption;
Fig. 7 is a flow chart showing one example of a routine for processing to replenish consumables, which is executed by the computer 21 for managing the replenishment of consumables;
Fig. 8 is a flow chart showing one example of a routine for processing to rewrite a status, which is executed by the computer 21 for managing the replenishment of consumables;
Fig. 9 is a flow chart showing one example of a routine for processing delivery, which is executed by the computer 31 for managing a delivery;
Fig. 10 is a flow chart showing one example of a primary routine for processing delivery, which is executed by primary computers 41, 51a and 51b for managing delivery;
Fig. 11 is a flow chart showing one example of a printing routine that is executed by the computer 11 for managing the state of consumption; and
Fig. 12 is a flow chart showing one example of a charge processing routine, which is executed by the computer 21 for managing the replenishment of consumables.

### BEST MODE FOR CARRYING OUT THE INVENTION

Next, a description is given of a best mode for carrying out the invention with reference to embodiments.

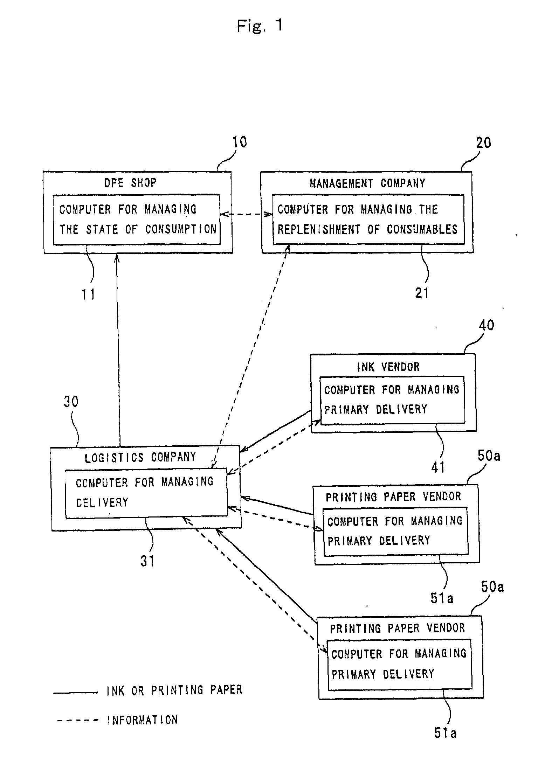

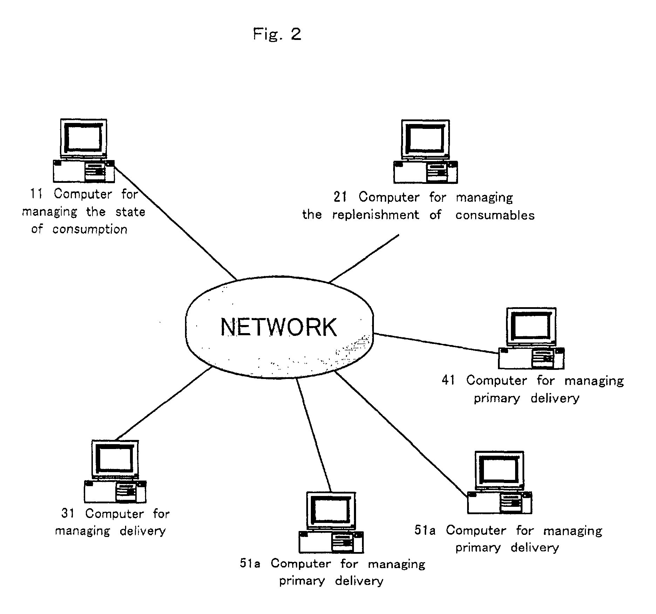

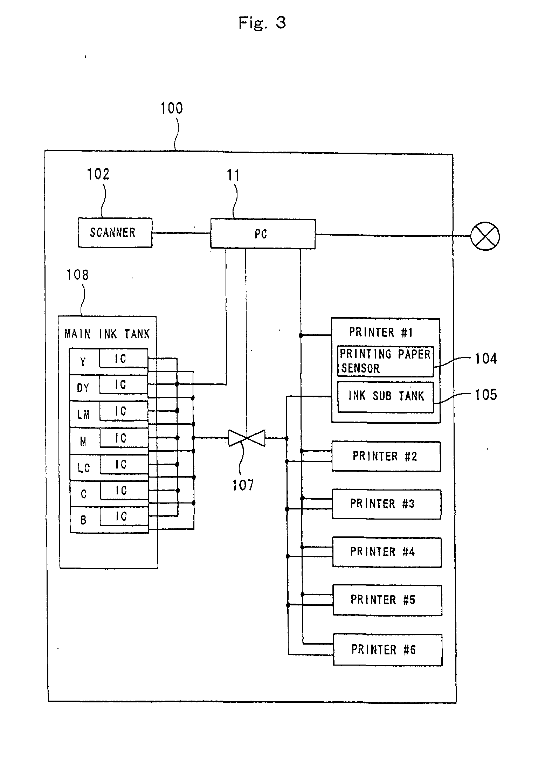

Fig. 1 is a view showing the outline of the configuration of a system for managing the replenishment of consumables according to an embodiment of the invention. As illustrated in the drawing, equipment for managing the replenishment of consumables according to the embodiment is composed as a network (for example, the Internet) in which various computers are employed. They are a computer 11 for managing the state of consumption of ink and printing sheets of paper, as consumables, which are consumed in a printer apparatus 100 (see Fig.3) for printing digital photographic images, which is installed in a DPE shop 10 where print service is provided by requests of general consumers on the basis of digital data; a computer 21 for managing the replenishment of consumables, installed in a management company 20 that manages and controls the replenishment of ink and printing sheets of paper as consumables for printer apparatuses 100 for printing digital photographic images, which are installed in respective DPE shops 10, on the basis of information from the computers 11 for managing the state of consumption installed in a plurality of DPE shops 10; a computer 31 installed in a logistics company that procures the consumables and simultaneously makes actual delivery of the consumables for replenishment; and primary delivery managing computers 41, 51a and 51b that are installed in an ink vendor 40 and vendor 50a and 50b of printing sheets of paper, who deliver the same to the logistics company. Also, in Fig. 1, the single-headed solid arrows show flows of consumables such as ink and printing sheets of paper, and the double-headed arrows drawn by dashed lines show flows of information. Fig. 2 shows one example of a network configuration of a system for managing the replenishment of consumables according to the above embodiment.

Fig. 3 is a configurational view showing the outline of the construction of an apparatus 100 for printing digital photographic images, which is installed in a DPE shop 10. The apparatus 100 for printing digital photographic images is provided, as shown in the same drawing, with a computer 11 for managing the state of consumption, six printers #1 through #6 connected to the computer 11 for managing the state of consumption, a main ink tank 108 that feeds ink to respective ink sub tanks 105 of the printers #1 through #6, and a scanner 102 connected to the computer 11 for managing the state of consumption.

The printers #1 through #6 print a digital photographic image on roll-shaped printing paper attached to a roll unit (not illustrated) by using seven colors of dark yellow (DY), yellow (Y), light magenta (LM), magenta (M), light cyan (LC), cyan (C), and black (B), which are provided from the main ink tank 108 and are stored in the ink sub tank 105. A printing paper sensor 104 that detects a near end mark provided near the end of consumption of the printing paper is attached to the printing paper holder for the respective printers #1 through #6, whereby it is possible to detect the vicinity of the completion of the consumption of the printing paper. Also, in Fig. 3, although somewhat simplified, the respective printers #1 through #6 are provided with an ink sub tank per color.

The main ink tank 108 is provided with a detachably mounted ink cartridge that is made into a cartridge per color, wherein ink accommodated in the ink cartridge can be provided into the ink sub tank 105 of the respective printers #1 through #6 by a pump 107 that is driven by control signals of the computer 11 for managing the state of consumption. The color-by-color ink cartridges are provided with an integrated circuit (IC), communicable with the computer 11 for managing the state of consumption, in which various types of information such as the remaining quantity of ink may be written. The remaining quantity of ink written in the IC is calculated by the quantity of ink consumption, which is obtained by, for example, multiplying the number of dots hit by specified printing by the ink quantity per drop.

The computer 11 for managing the state of consumption functions as a printing managing computer that executes printing of digital photographic images by using the printers #1 through #6, and simultaneously functions as a computer for detecting the state of consumption, which is able to detect the state of consumption of ink of the respective colors on the basis of signals from the printing paper sensor 104 of the respective printers #1 through #6 and on the basis of the remaining quantity written in the IC attached to the respective ink cartridges of the main ink tank 108.

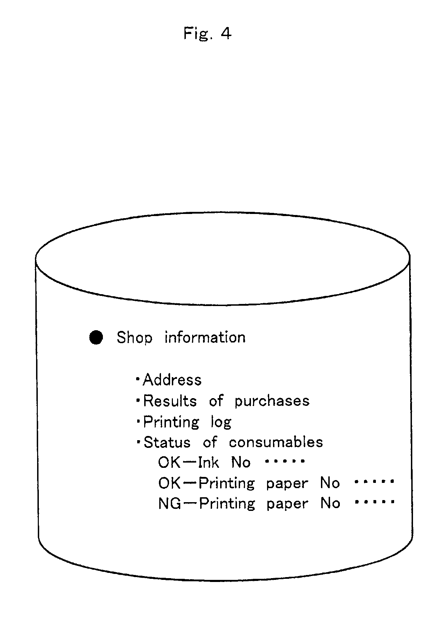

Aharddisk (not illustrated) of the computer 21 for managing the replenishment of consumables, which is installed in a management company 20, stores, as shop information illustrated in Fig. 4, the addresses of respective DPE shops 10, results of purchases as actual results of ink and printing paper, which are replenished to the respective DPE shops 10, printing logs including printing setting information such as paper sizes which have actually been printed in the respective DPE shops 10, and the status of consumables showing whether or not the remaining quantities of ink and printing paper are sufficient. Also, it has been assumed, in the computer 21 for managing the replenishment of consumables according to the embodiment, that as the status of consumables, [OK] is stored when the remaining quantities of ink and printing paper are sufficient, and [NG] is stored when they are insufficient.

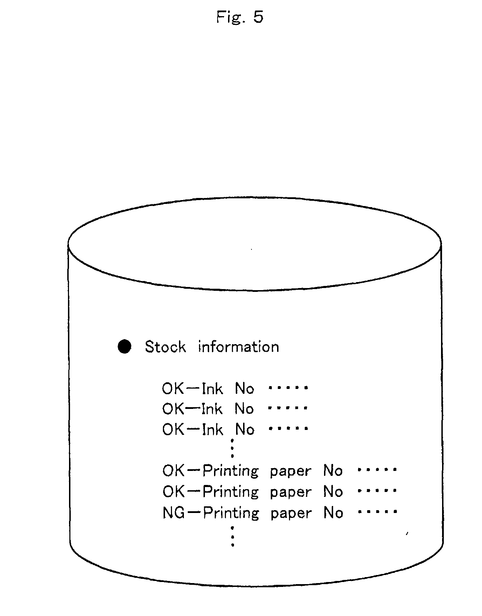

A hard disk (not illustrated) of the delivery managing computer 31 installed in the logistics company 30 stores, as stock information illustrated in Fig. 5, information showing whether or not it is necessary to request that a delivery be made with respect to ink and printing paper as respective consumables. It has been assumed, in the delivery managing computer 31 according to the embodiment, that the status of consumables [OK] is stored when the stock of consumables is sufficient, and [NG] is stored when the stock thereof is insufficient.

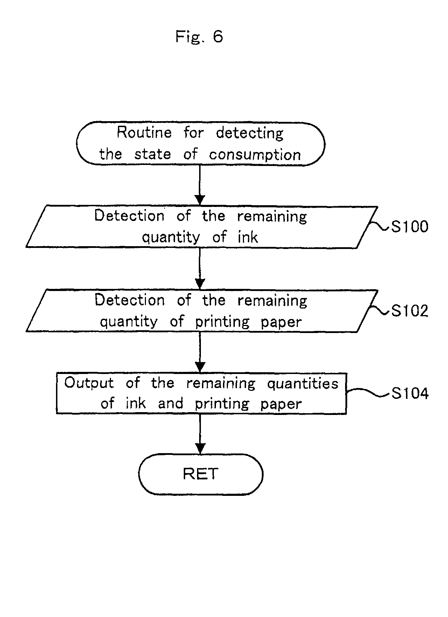

Next, a description is given of the actions of the respective computers 11, 21 and 31, in particular, a process for replenishing consumables and a process for calculating charges . First, the process for replenishing consumables is explained. Fig. 6 is a flow chart showing one example of a routine for detecting the state of consumption, which is executed by the computer 11 for managing the state of consumption. The routine may be constructed so as to be repeated once every fixed duration of time (for example, once every hour or once every day) or may be constructed so as to be executed whenever the computer 21 for managing the replenishment of consumables makes arequest. When the routine for processing to detect the state of consumption is executed, the computer 11 for managing the state of consumption first carries out a process (step S100) for detecting the remaining quantity of ink of respective colors by inputting signals from the sensor IC attached to the respective ink cartridges and a process (step S102) for detecting the remaining quantity of printing paper on the basis of the printing paper sensors 104 of the printers #1 through #6. And, the computer 11 outputs the remaining quantities of ink and printing paper, which have been thereby detected (Step S104), and the routine ends. The output process becomes a process for outputting data to a RAM and a hard disk in order to write the data in an appointed area of the RAM and an appointed area of the hard disk (not illustrated), which are provided by the computer 11 for managing the state of consumption when the routine is executed once every fixed duration of time, and becomes another process for outputting the data to the computer 21 for managing the replenishment of consumables when the routine is executed by a request of the computer 21 for managing the replenishment of consumables.

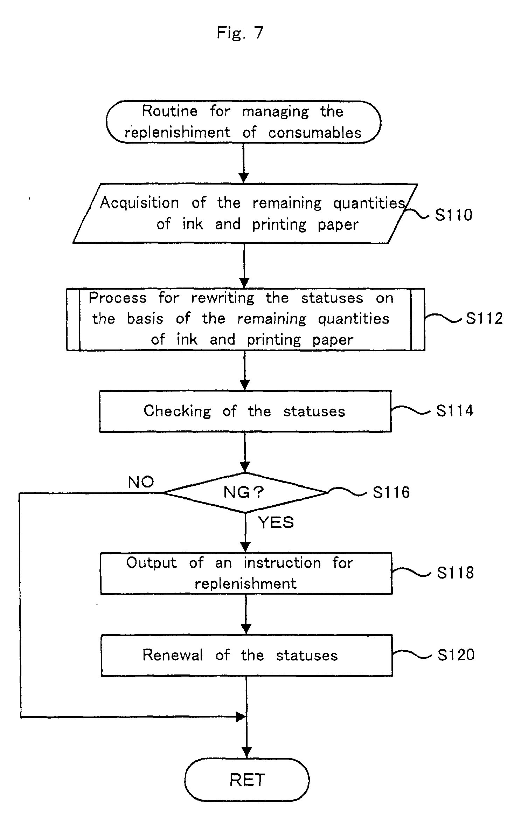

Fig. 7 is a flow chart showing one example of a routine for managing the replenishment of consumables, which is executed by the computer 21 for managing the replenishment of consumables. The routine is executed so as to be repeated once every fixed duration of time (for example, once every hour or once every day). If the routine is executed, the computer for managing the replenishment of consumables first carries out a process for acquiring the remaining quantity of ink and remaining quantity of printing paper of apparatuses 100 for printing digital photographic images, which are installed in the respective DPE shops 10 (Step S110). In detail, the process is carried out by a process in which, where the computer 11 for managing the state of consumption executes the above-described routine for detecting the state of consumption once every fixed duration of time, the computer 11 for managing the state of consumption accesses an appointed area of the RAM and an appointed area of the hard disk with respect to a request to acquire the remaining quantities of ink and printing paper from the computer 21 for managing the replenishment of consumables and outputs the acquired remaining quantities of ink and printing paper to the computer 21 for managing the replenishment of consumables, and a process by which the computer 21 for managing the replenishment of consumables inputs the outputted remaining quantities of ink and printing paper, and where the computer 11 for managing the state of consumption executes a routine for detecting the state of consumption with respect to the request of the computer 21 for managing the replenishment of consumables, the process is carried out by the computer 21 for managing the replenishment of consumables requesting the computer 11 for managing the state of consumables to execute a process for detecting the state of consumption, and, to the contrary, the computer 21 inputting the remaining quantities of ink and printing paper, which are outputted by the computer 11 for managing the state of consumption.

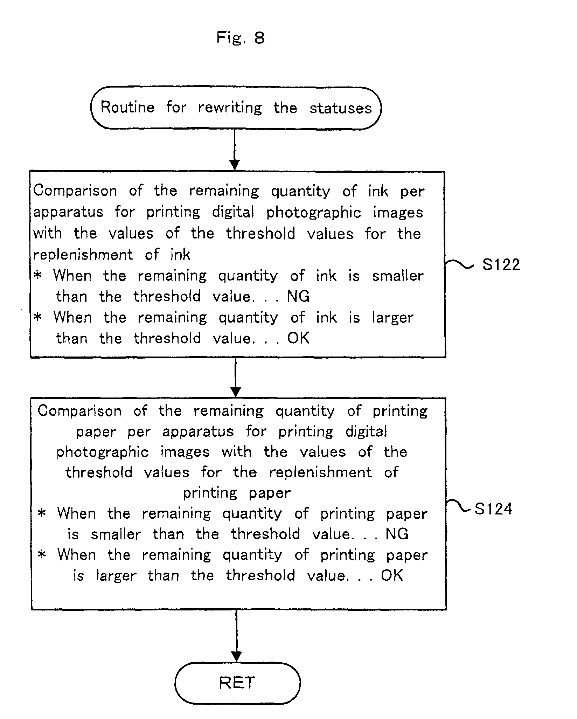

Thus, as the remaining quantities of ink and printing paper of apparatuses for printing digital photographic images, which are installed in the respective DPE shops 10 are acquired, a process of rewriting the status of consumables of the shop information stored on the hard disk on the basis of the acquired remaining quantities of ink and printing paper is carried out ( Step S112). The process of rewriting the status of consumables is executed by a routine of rewriting the status illustrated in Fig. 8. Intheroutine, first, the acquired remaining quantity of ink of the respective apparatuses for printing digital photographic images is compared with the threshold values corresponding thereto in the preset and stored threshold map for replenishing ink, wherein when the acquired remaining quantity of ink is smaller than the threshold value, the status is rewritten to [NG], and when the remaining quantity of ink is larger than the threshold value, it is rewritten to [OK] (Step S122). Next, the acquired remaining quantity of printing paper of the respective apparatuses for printing digital photographic images 100 is compared with the threshold value corresponding thereto in the preset and stored threshold map for replenishing printing paper, wherein when the acquired remaining quantity of printing paper is smaller than the threshold value, the status is rewritten to [NG], and when the remaining quantity of ink is larger than the threshold value, the status is rewritten to [OK] (Step S124). Then, the routine ends. The threshold map for replenishing ink and the threshold map for replenishing printing paper are established in consideration of the speed of consumption of ink and printing paper in the respective apparatuses for printing digital photographic images . One example of a map in which the threshold map for replenishing ink and the threshold map for replenishing printing paper are combined is shown in the following table.

| Printing apparatus ID | Threshold value for replenishing ink | Threshold value for replenishing printing paper |
|---|---|---|
| 10001055 | 20% | 20% |
| 10001056 | 25% | 22% |
| 10001057 | 15% | 17% |
| | | |
| | | |

Thus, if the process of rewriting the status of consumables of the shop information is carried out, next, it is checked whether or not [NG] exists in any one of the statuses of consumables (Steps S114 and S116). When [NG] exists in any one of the statuses of consumables, instruction to replenish a consumable, whose status is [NG], to an apparatus 100 for printing digital photographic images of the corresponding DPE shop 10 (that is, instruction for replenishment) is outputted (Step S118), and the status is renewed to [During instruction for replenishment] (Step S120), wherein the routine ends. The process for outputting an instruction for replenishment is carried out by outputting a request for commencing the process of a delivery managing process to the computer 31 for managing delivery and simultaneously outputting an instruction for replenishment to the RAM and hard disk in order to write the instruction for replenishment in an appointed area of the RAM and in an appointed area of the hard disk (not illustrated) which are provided by the computer 21 for managing the replenishment of consumables. Also, when the statuses of all the consumables are [OK], the routine ends without executing the process of outputting an instruction for replenishment.

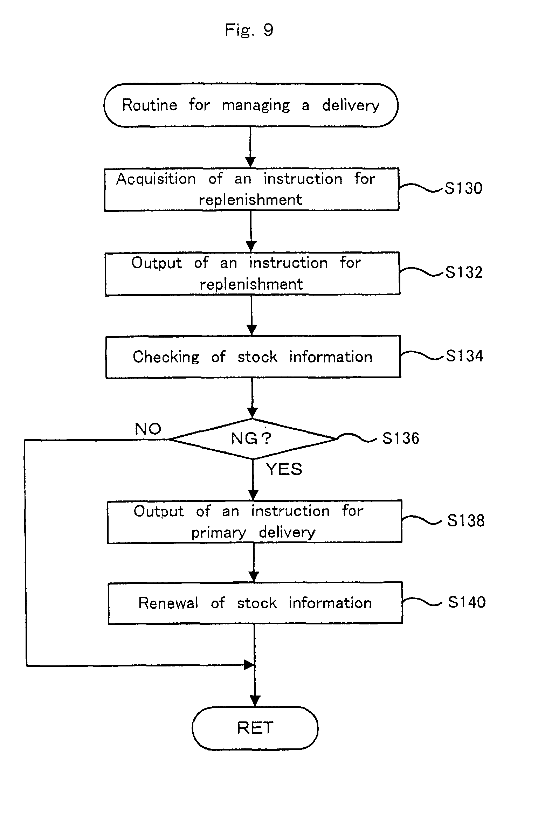

Fig. 9 is a flow chart showing one example of a routine for processing to manage the delivery, which is executed by the computer 31 for managing the delivery. The routine is carried out when a request for commencing the process for managing the delivery is inputted by the computer 21 for managing the replenishment of consumables or once every fixed duration of time (for example, once every hour or once every day). If the routine for processing to manage the delivery is executed, first, the computer 31 for managing a delivery executes a process of acquiring an instruction for replenishment (Step S130). In detail, the delivery managing computer 31 requests the output of an instruction for delivery to the computer 21 for managing the replenishment of consumables, and to the contrary, the delivery managing computer 31 inputs an instruction for replenishment, which is outputted by the computer 21 for managing the replenishment of consumables, whereby the above-described process is carried out.

As an instruction for replenishment is acquired, the process for outputting the acquired instruction for replenishment is executed (Step S132). The process enables, for example, displaying a list of instructions for replenishment on a CRT screen or outputting the list thereof from a printer. By the process for outputting instructions of replenishment, the logistics company 30 forwards the consumables to be replenished to a DPE shop 10 for which the consumables are replenished, and sets the consumables in an apparatus 100 for printing digital photographic images. As a result, it is possible to prevent any inconvenience due to failure of forgetting in the replenishment of consumables, that is, a shortage of ink or printing paper, etc.

As the computer 31 for managing delivery outputs an instruction for replenishment, the computer 31 checks the stock information (Step S134) and judges whether or not [NG] exists in any one of the consumables (Step S136). When [NG] exists in any one of the consumables, the computer 31 outputs an instruction for primary delivery to ship a consumable whose status is [NG] (Step S138). The status of the consumables of [NG] is renewed to [During instruction for primary delivery] (Step S140). Then, the process ends. The process for outputting an instruction for the primary delivery is carried out so that a request for commencing the process for managing the primary delivery is outputted to the computers 41, 51a and 51b for managing the primary delivery, and simultaneously the primary delivery instruction is outputted to the RAM and hard disk (not illustrated), which the computer 31 for managing delivery provides, in order to write the primary delivery instruction which is written in appointed area of the RAM and an appointed area of the hard disk. Also, when the statuses of all the consumables are [OK], the routine ends without executing the process for outputting the primary delivery instruction.

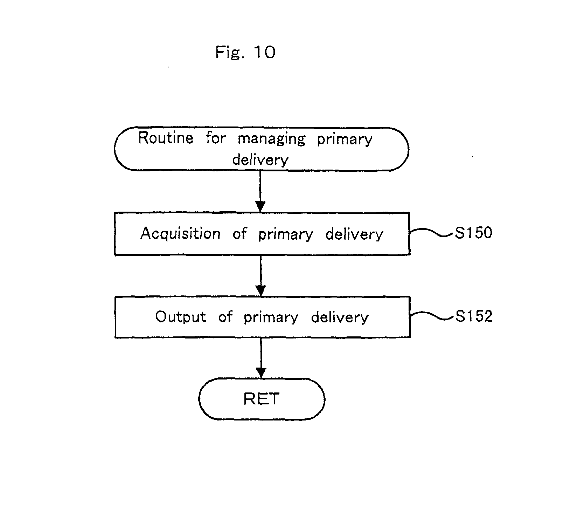

Fig. 10 is a flow chart showing one example of a routine for processing to manage primary delivery, which is executed by the computers 41, 51a and 52b for managing primary delivery. The routine is executed when a request for commencing the process for managing the primary delivery is inputted from the computer 31 for managing delivery and once every fixed duration of time (for example, once every hour or once every day). As the routine for processing to manage the primary delivery is executed, the computers 41, 51a and 51b for managing the primary delivery execute a process of acquiring an instruction for primary delivery (Step S150). The process carries out a process of acquiring an instruction for replenishment of Step S130 in the routine for processing to manage delivery in Fig. 9 as well. And, as the primary delivery instruction is acquired, a process of outputting the acquired primary delivery instruction is executed (Step S152). The process enables, for example, displaying a list of instructions for replenishment on a CRT screen or outputting the list thereof from a printer. With the process for outputting the primary delivery, an ink vendor 40 and printing paper vendors 50a and 50b forward the consumables to be shipped to the logistics company 30. As a result, it is possible to prevent any inconvenience due to a shortage in the stock of consumables, that is, to secure the replenishment of the consumables for DPE shops 10 without fail.

According to the process for replenishing consumables by the system for managing the replenishment of consumables according to the embodiment described above, it is possible to prevent any inconvenience in the apparatuses 100 for printing digital photographic images, which are installed in the respective DPE shops 10, that is, to prevent the printing from being disabled due to a shortage in ink or a shortage in printing paper. Further, since it is possible to automatically acquire the remaining quantities of ink and printing paper via communications lines and to replenish the consumables, human-oriented mistakes can be completely removed.

In the process of replenishing consumables in the system for managing the replenishment of consumables according to the present embodiment, the remaining quantity of printing paper of printer apparatuses 100 for printing digital photographic images is detected by a printing paper sensor 104 that detects a near-end mark. However, the remaining quantity may be detected by detecting the thickness of rolled paper, or detecting the remaining quantity of printing paper on the basis of a calculated value obtained by calculating the quantity of printing since rolled paper is replenished.

Further, in the management of replenishment of consumables in the system for managing the replenishment of consumables according to the above-described embodiment, an instruction for replenishment is outputted on the basis of the remaining quantities of ink and printing paper. However, an instruction for replenishment may be outputted on the basis of the quantities of consumption of ink and printing paper after the last replenishment.

In the management of replenishment of consumables in the system for managing the replenishment of consumables according to the above-described embodiment, a process for rewriting the statuses of consumables employs threshold maps for replenishing ink and printing paper, in which threshold values corresponding to the respective apparatuses for printing digital photographic images are preset, are used. However, the threshold values in the threshold maps for replenishing ink and printing paper may be established on the basis of the actual results of consumption of ink and printing paper in the respective apparatuses 100 for printing digital photographic images. For example, the maps may be renewed on the basis of the quantities of consumption of consumables for the immediate past three months in the respective apparatuses for printing digital photographic images and the time necessary to replenish the consumables for the respective apparatuses for printing digital photographic images.

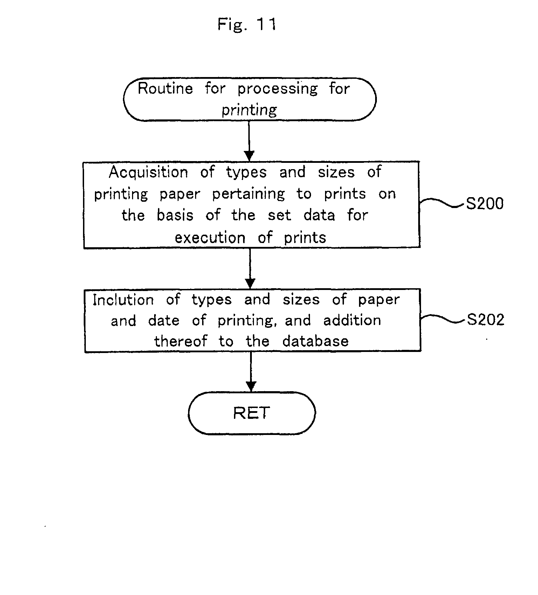

Next, a description is given of the charging process in the system for managing the replenishment of consumables according to the embodiment. Fig. 11 is a flow chart showing one example of a routine for processing when printing, which is carried out by the computer 11 for managing the state of consumption. The routine is executed whenever printing is carried out by the printers #1 through #6 on the basis of the instructions of the computer 11 for managing the state of consumption. As the on-printing processing routine is executed, the computer 11 for managing the state of consumption acquires the type and size of printing paper pertaining to the printing on the basis of the set data for execution of the printing (Step S200), prepares records including the type and size of printing paper and data of the printing, and adds the records to the data base (Step S202). Then, the routine ends.

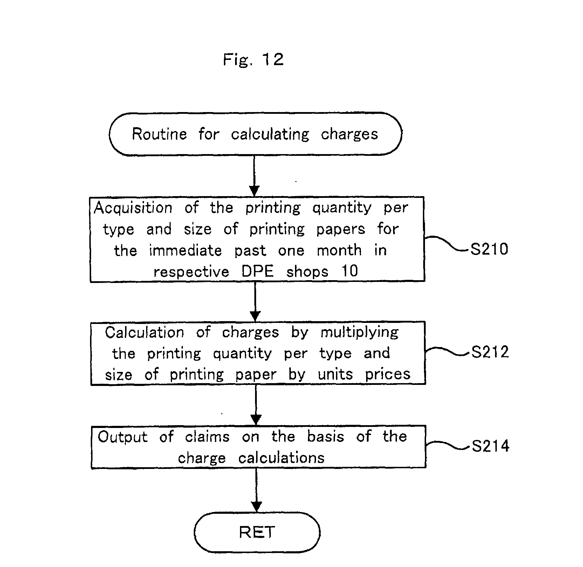

Fig. 12 is a flow chart showing one example of the charge processing routine which is executed by the computer 21 for managing the replenishment of consumables. The routine is executed at the beginning of the month. As the charge processing routine is executed, the computer 21 for managing the replenishment of consumables first executes a process of acquiring the printing quantities of per type of paper and size thereof in the last full one month of the respective DPE shops 10 (Step S210). In detail, in the process, the computer 21 for managing the state of consumption of consumables makes a request for outputting the printing quantities per type of paper and size thereof, which cover the immediate past month, to the computer 11 for managing the state of consumption, which is installed in the respective DPE shops 10, and with respect to the request, the computer 11 for managing the state of consumption retrieves the data base by using the printing date as a key, calculates the printing quantities per type of paper and size thereof in regard to the hits recorded, and outputs the data of the hits recorded to the computer 21 for managing the replenishment of the consumables. And, the printing quantities per type of paper and size thereof, which are outputted, are inputted in the computer 21 for managing the replenishment of consumables.

As the printing quantities as type of paper and size thereof, which are used for printing in the respective DPE shops 10 for one month, are acquired, the charges are calculated by multiplying the printing quantities per type of paper and size thereof by the unit prices (Step S212), and the calculated results are outputted to the corresponding computer 11 for managing the state of consumption (Step S214). Then, the routine ends. The following table 1 shows one example of a list showing the calculated charges for the respective DPE shops 10. Also, the computer 11 for managing the state of consumption, in which the results of the charge calculation are inputted, may display the results on its CRT screen or may output the same through its printer.

| Name of DPE shop | Type of printing paper | Paper size | Unit price | Printing quantity | Amount |
|---|---|---|---|---|---|
| xxxxxx | Polished paper A | A4 | xxxx | 150 | yyyy |
| xxxxxx | Polished paper A | A3 | xxxx | 70 | yyyy |
| xxxxxx | Polished paper B | A4 | xxxx | 130 | yyyy |
| xxxxxx | Polished paper B | A3 | xxxx | 60 | yyyy |
| | | | | | |
| | | | | | |
| | | | | | |

According to the charge process in the system for managing the replenishment of consumables according to the embodiment described above, it is possible to charge for the consumables used. Furthermore, the charge calculation can be carried out at the same time when managing the replenishment of the consumables . Also, according to the charge process in the system for managing the replenishment of consumables of the embodiment, since unit prices are established with respect to the printing quantities per type of paper and size thereof, and charging is enabled, further accurate charging will be enabled.

In the system for managing the replenishment of consumables according to the embodiment, the charge calculation is carried out by a computer 21 for managing the replenishment of consumables, which is installed in a management company 20. However, there is no problem if the charge calculation is carried out by a computer 31 for managing delivery, which is installed in a logistics company 30.

In the system for managing the replenishment of consumables according to the embodiment, the charge process is carried out by multiplying the printing quantities per type of paper and size thereof by their unit prices. However, the charge calculation may be executed by multiplying the use quantity of ink by its unit price in addition to the types and sizes of paper, or may be executed on the basis of the paper sizes and printing information.

In the system for managing the replenishment of consumables according to the embodiment, a computer 11 for managing the state of consumption, a computer 21 for managing the replenishment of consumables, and a computer 31 for managing delivery constitute a network. However, the state of consumption of consumables of the respective printer apparatuses 100 for printing digital photographic images may be detected through remote operations from a computer for managing the replenishment of consumables.

In addition, in the system for managing the replenishment of consumables according to the embodiment, a process for managing the replenishment of consumables is executed by a computer 21 for managing the replenishment of consumables , which is installed in amanagement company 20, and actual replenishment of the consumables is carried out by a logistics company 30 where a computer 31 for managing delivery, which acquires instructions of replenishment from the computer 21 for managing the replenishment of consumables, is installed. However, there is no problem if the management company 20 and logistics company 30 are made integral with each other. In this case, the computer 21 for managing the replenishment of consumables concurrently functions as the computer 31 for managing delivery, and the management company 20 also functions as the logistics company 30. Or, the computer 31 for managing delivery concurrently functions as the computer 21 for managing the replenishment of consumables, and the logistics company 30 also functions as the management company 20.

Although the system for managing the replenishment of consumables according to the embodiment is applied to management of replenishment of printing ink and printing paper, which are consumables in printer apparatuses 100 for printing digital photographic images, and applied to the charge calculations, the system may also be applicable to management of replenishment in all types of apparatuses, in which other consumables are used, and the charge calculations thereof.

In the embodiment, the above description is based on the system for managing the replenishment of consumables, in which a network including a computer 11 for managing the state of consumption, a computer 21 for managing the replenishment of consumables, and a computer 31 for managing delivery is constructed. However, the system may be made into equipment for managing the replenishment of consumables, which consists of only a computer 21 for managing the replenishment of consumables. The system may be made into a method (consumables replenishing method) for replenishing consumables, which has been described with reference to the system according to the embodiment. Also, it may be made into a program that causes a computer to function as the computer 21 for managing the replenishment of consumables. In this case, respective processes in the routine for managing the replenishment of consumables, which are illustrated in Fig. 7, and respective processes in the routine for charge calculations which are illustrated in Fig. 12 may be written or prepared so as to be readable by a computer, using an adequate programming language.

As described above, the embodiment of the invention is described with reference to a mode for carrying out the invention. However, the invention is not limited to such an embodiment, wherein it is needless to say that the invention is subjected to various modifications and/or modes without departing from the spirit of the invention.

## Claims

1. A method for replenishing appointed consumables for a plurality of apparatuses that consume said appointed consumables, comprising the steps of:
(a) acquiring the state of consumption of said consumables in said plurality of apparatuses via communications lines;
(b) judging or determining the necessity of replenishment of said consumables for said plurality of apparatuses on the basis of the state of consumption acquired above; and
(c) replenishing said consumables for any of said apparatuses, which corresponds to the results of said judgement.

2. The method for replenishing consumables as set forth in Claim 1, wherein said step (b) judges or determines replenishment of the appointed consumables when the remaining quantity of the appointed consumables or the quantity of consumption thereof reaches an appointed level in said apparatuses.

3. The method for replenishing consumables as set forth in Claim 1, wherein said step (b) judges or determines the replenishment of the appointed consumables when the remaining quantity of the appointed consumables or the quantity of consumption thereof reaches an appointed level that is individually established in respective apparatuses that consume consumables.

4. The method for replenishing consumables as set forth in Claim 3, wherein said step (b) judges or determines the replenishment of said appointed consumables by using said quantities that are established on the basis of the results of the consumption of said consumables in said plurality of apparatuses.

5. The method for replenishing consumables as set forth in any one of Claims 1 through 4, wherein said step (c) further comprises the steps of:
(c1) outputting an instruction for replenishment of said consumables for said plurality of apparatuses, which consume consumables, via communications lines on the basis of the results of the judgement or determination; and
(c2) acquiring said outputted instruction for replenishment via said communications lines and simultaneously replenishing said appointed consumables for said apparatuses, which consume consumables, based on said instruction for replenishment.

6. The method for replenishing consumables as set forth in any one of Claims 1 through 5, wherein said apparatuses that consumes consumables are printing machines having at least one ink jet printer, and said appointed consumables are printing ink and printing sheets of paper, which are provided to said ink jet printer.

7. The method for replenishing consumables as set forth in any one of Claims 1 through 6, further comprising the steps of:
(d) calculating charges on the basis of the state of consumption, which is acquired as described above, and
(e) collecting the calculated charges.

8. The method for replenishing consumables as set forth in any one of Claims 1 through 5, wherein said plurality of apparatuses that consume consumables are printing machines having at least one ink jet printer, and said appointed consumables are printing ink and a plurality of printing sheets of paper, which are provided to said ink jet printer, and wherein (d) the charge is calculated based on said acquired state of consumption and unit prices in compliance with the type of the printing sheets of paper, and (e) the calculated charge is collected.

9. The method for replenishing consumables as set forth in Claim 8, wherein said step (d) calculates the charge by using the unit prices in compliance with printing information.

10. A system for managing the replenishment of consumables, which manages the replenishment of appointed consumables for a plurality of apparatuses, which consume said appointed consumables, comprising:
section for detecting the state of consumption, which is able to detect the state of consumption of said appointed consumables of said plurality of apparatuses, which consume said consumables, via communications lines;
section for judging or determining the replenishment of the appointed consumables for said plurality of apparatuses that consume consumables on the basis of said detected state of the consumption; and
section for instructing the replenishment of said appointed consumables for any of said apparatuses corresponding thereto when said judging section judges or determines the replenishment of said appointed consumables.

11. The system for managing the replenishment of consumables as set forth in Claim 10, wherein said section for detecting the state of consumption further comprises section for detecting the quantity of consumption of the consumables or the remaining quantity thereof in said apparatuses that consume the consumables, and section for transmitting and outputting said detected quantity of consumption of said consumables or the remaining quantity thereof to said replenishment judging section via said communications lines.

12. The system for managing the replenishment of consumables as set forth in Claim 10 or 11, wherein said replenishment judging section judges or determines the replenishment of said appointed consumables when the remaining quantity of said appointed consumables or the quantity of consumption thereof reaches the predetermined level in said apparatuses that consume consumables.

13. The system for managing the replenishment of consumables as set forth in Claim 10 or 11, wherein said replenishment judging section judges or determines the replenishment of said appointed consumables when the remaining quantity of said appointed consumables or the quantity of consumption thereof in said plurality of apparatuses reaches a predetermined level that is individually established in a plurality of respective apparatuses that consume consumables.

14. The system for managing the replenishment of consumables as set forth in Claim 13, wherein said replenishment judging section judges or determines the replenishment of said appointed consumables by using said predetermined level that has been established on the basis of the results of consumption of said appointed consumables in said plurality of apparatuses that consume consumables.

15. The system for managing the replenishment of consumables as set forth in any one of Claims 10 through 14, wherein said replenishment instructing section outputs the replenishment of said appointed consumables for said apparatus to a replenishment instruction receiving section via communications lines.

16. The system for managing the replenishment of consumables as set forth in any one of Claims 10 through 15, wherein said apparatuses that consume consumables are printing machines having at least one ink jet printer, and said appointed consumables are printing ink and printing sheets of paper, which are provided in said ink jet printer.

17. The system for managing the replenishment of consumables as set forth in any one of Claims 10 through 16, further comprising: section for calculating charges on the basis of the state of consumption that has been detected as described above, and section for claiming the charges on the basis of said charge calculations.

18. The system for managing the replenishment of consumables as set forth in any one of Claims 10 through 15, wherein said plurality of apparatuses that consume consumables are printing machines having at least one ink jet printer, and said appointed consumables are printing ink and a plurality of types of printing sheets of paper, which are provided to said ink jet printer, and further comprising:
section for calculating charges on the basis of said detected state of consumption and unit prices in compliance with the type of printing sheets of paper, and
section for instructing to claim on the basis of said charge calculation.

19. The system for managing the replenishment of consumables as set forth in Claim 18, wherein said charge calculating section is made into a section for calculating charges by using the unit prices in compliance with the printing information.

20. Equipment for managing the replenishment of consumables according to the invention, which manages the replenishment of appointed consumables for a plurality of apparatuses that consume said appointed consumables, comprising: section for inputting the state of consumption of consumables in said plurality of apparatuses that consume said consumables via communications lines;
section for judging or determining the replenishment of said consumables based on said inputted states of consumption; and
section for instructing the replenishment of said consumables for said apparatuses that consume said consumables when said replenishment judging section judges or determines the replenishment of consumables.

21. The equipment for managing the replenishment of consumables as set forth in Claim 20, wherein said replenishment judging section judges or determines the replenishment of said appointed consumables when the remaining quantity of said appointed consumables or the quantity of consumption thereof reaches a predetermined level in said apparatuses that consume the appointed consumables.

22. The equipment for managing the replenishment of consumables as set forth in Claim 20, wherein said replenishment judging section judges or determines the replenishment of said appointed consumables when the remaining quantity of said appointed consumables or the quantity of consumption thereof reaches the predetermined level that is individually established in said respective apparatuses that consume consumables.

23. The equipment for managing the replenishment of consumables as set forth in Claim 22, wherein said replenishment judging section judges or determines the replenishment of said appointed consumables by using said predetermined level that has been established on the basis of the results of consumption of said appointed consumables in said plurality of apparatuses that consume consumables.

24. The equipment for managing the replenishment of consumables as set forth in any one of Claims 20 through 23, wherein said replenishment instructing section outputs the replenishment of said appointed consumables for said apparatus to replenishment instruction receiving section which is connected via communications lines.

25. The equipment for managing the replenishment of consumables as set forth in any one of Claims 20 through 24, wherein said apparatuses that consume consumables are printing machines having at least one ink jet printer, and said appointed consumables are printing ink and printing sheets of paper, which are provided to said ink jet printer.

26. The equipment for managing the replenishment of consumables as set forth in any one of Claims 20 through 25, further comprising: section for calculating charges on the basis of the state of consumption that has been detected as described above, and
section for instructing claims on the basis of said charge calculations.

27. The equipment for managing the replenishment of consumables as set forth in any one of Claims 20 through 24, wherein said plurality of apparatuses that consume consumables are printing machines having at least one ink jet printer, and said appointed consumables are printing ink and a plurality of types of printing sheets of paper, which are provided to said ink jet printer, and
further comprising:
section for calculating charges on the basis of said detected state of consumption and unit prices in compliance with the type of the printing sheets of paper; and
section for instructing to claim on the basis of said charge calculations.

28. The equipment for managing the replenishment of consumables as set forth in Claim 27, wherein said charge calculating section calculates the charges by using the unit prices in compliance with the printing information.

29. A program for managing the replenishment of consumables, by which a computer is caused to function as the equipment for managing the replenishment of consumables as set forth in any one of Claims 20 through 28.
